# FASCICULE DE BREVET EUROPEEN

(11) **EP 2 394 080 B1**
(45) Date de publication et mention de la délivrance du brevet: **20.03.2013**
(21) Numéro de dépôt: 10707591.3
(22) Date de dépôt: 27.01.2010
(51) Int. Cl.: F16K 15/14

(54) **DISPOSITIF D'OBTURATION SÉLECTIVE D'UN PASSAGE DE FLUIDE**
VORRICHTUNG ZUR SELEKTIVEN BLOCKIERUNG EINES DURCHFLUSSES
DEVICE FOR SELECTIVELY BLOCKING A FLUID PASSAGE

(30) Priorité: 03.02.2009 FR 0900445
(43) Date de publication de la demande: 14.12.2011
(73) Titulaire: Air Liquide Medical Systems, 92182 Antony Cedex (FR); L'Air Liquide Société Anonyme pour l'Etude et l'Exploitation des Procédés Georges Claude, 75007 Paris (FR)
(72) Inventeur: COLLADO, Pedro, 77330 Ozoir La Ferriere (FR)
(74) Mandataire: De Cuenca, Emmanuel Jaime
(86) Numéro de dépôt international: PCT/FR2010/050118
(87) Numéro de publication internationale: WO 2010/089490

(56) Documents cités:
- DE-A1- 2 129 800
- US-A- 4 408 632
- US-A- 5 413 230

## Description

La présente invention concerne un dispositif d'obturation sélective d'un passage de fluide, un robinet pourvu d'un tel dispositif et un procédé de remplissage correspondant.

L'invention concerne plus particulièrement un dispositif d'obturation sélective d'un passage de fluide, notamment pour une prise de remplissage d'un robinet de gaz.

Un tel dispositif comprend classiquement une structure définissant un canal pour le passage de fluide s'étendant entre une entrée située à une extrémité amont et une sortie située à une extrémité aval, un siège de clapet, un clapet sélectivement mobile dans le canal entre une première position d'obturation du passage par appui étanche sur le siège et une seconde position d'ouverture du passage sans appui étanche sur le siège, un organe de rappel sollicitant le clapet vers sa première position, le dispositif d'obturation comprenant un joint d'étanchéité déformable porté par le clapet mobile et/ou par le siège, pour appuyer sur le siège et participer à l'étanchéité de l'obturation lorsque le clapet est dans sa première position, le clapet mobile comprenant une extrémité amont destinée à être soumise à une pression d'ouverture pour déplacer le clapet vers sa second position.

L'ouverture du clapet lors de remplissage est réalisée par exemple par une pression mécanique et/ou par la pression du gaz de remplissage.

Ce type de dispositif est parfois appelé clapet de remplissage ou clapet anti-retour. Lors de l'utilisation des ces clapets dans les prises de remplissage de robinets de gaz, il peut se produire avec le temps une usure de la garniture d'étanchéité du clapet. Cette usure de la garniture d'étanchéité peut être le fait de la succession de cycles d'ouverture/fermeture du clapet. Cette usure peut provoquer l'apparition de fuites au cours du temps. L'usure est fréquemment due au frottement du joint dans son logement. Ceci est particulièrement pénalisant dans les produits nécessitant une durée de vie sans entretien relativement longue (dix ans par exemple).

Pour résoudre ce problème c'étanchéité, une solution consiste à prévoir un bouchon métallique supplémentaire en série avec le clapet. Ce bouchon supplémentaire doit ainsi être retiré (dévissé) avant chaque remplissage, et doit être remis après remplissage (vissé). Cette solution engendre des pertes de temps et des risques potentiels de sécurité.

Le document US 4 408 632 concerne un clapet anti-retour ayant un corps de valve mobile par rapport à un siège et portant un joint annulaire maintenu sur le corps de valve via une gaine concentrique. La gaine concentrique de maintien du joint sur le corps de valve est mobile relativement au corps de valve selon un débattement limité pour empêcher que le joint ne soit abîmé ou déplacé dans une position non fonctionnelle.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement défini par la partie caractérisante de la revendication 1.

Les modes de réalisation permettent de réaliser un clapet d'obturation auto-serrant qui rattrape les éventuels défauts des pièces, limite son usure, et compense même l'usure éventuelle des joints.

Par ailleurs, des modes de réalisation de l'invention peuvent comporter l'une ou plusieurs des caractéristiques suivantes :
- le mécanisme de mise en pression sélective du joint est déplaçable entre la position de travail et la position de repos de façon indépendante ou distincte du déplacement du clapet mobile relativement au siège,
- lorsque le clapet passe de sa seconde position à sa première position, la butée mobile vient s'arrêter en premier contre une portion fixe de la structure, pour provoquer un déplacement relatif entre le corps principal et la butée mobile qui déplace le mécanisme de mise en pression sélective du joint dans sa position de travail,
- du côté amont, le corps principal fait saille pour être soumis en premier à une pression d'ouverture et provoquer ainsi un déplacement relatif entre le corps principal et la butée mobile qui déplace le mécanisme de mise en pression sélective du joint dans sa position de repos,
- le corps principal et la butée mobile sont conformés relativement pour déplacer automatiquement le mécanisme de mise en pression sélective du joint dans la position de travail lorsque le clapet vient dans sa première position d'obturation,
- le corps principal et la butée mobile sont conformés relativement pour déplacer automatiquement le mécanisme de mise en pression sélective du joint dans la position de repos dès que ou avant que le clapet commence son déplacement vers sa seconde position,
- le joint d'étanchéité est situé sur le clapet mobile,
- le mécanisme de mise en pression sélective du joint assure un écrasement sélectif du joint pour augmenter l'encombrement du joint en direction du siège,
- la surface extérieure de la butée mobile est conjuguée d'une zone de réception du canal et, lorsque le clapet est dans sa première position, la butée mobile obture le canal en coopérant avec cette zone de réception pour former une seconde zone d'obturation, distincte de la zone d'obturation réalisée au niveau du joint déformable,
- la butée mobile comporte une forme extérieure formant un déflecteur pour le fluide, pour empêcher ou limiter l'impact direct du flux de fluide sur le joint lors des opérations de remplissage,
- le corps principal et la butée mobile comportent des formes conjuguées formant un arrêtoir limitant leur déplacement relatif dans le sens de la mise en pression joint, pour limiter le niveau de mise en pression du joint en dessous d'un seuil déterminé,
- la mise en pression sélective du joint est réalisée par un écrasement de ce dernier,
- le corps principal et la butée mobile sont mobiles relativement selon au moins un mouvement de translation,
- le joint d'étanchéité est un joint de type torique, la surface du siège destinée à coopérer avec le joint étant cylindrique,
- le mécanisme de mise en pression sélective du joint est réalisé en prenant en sandwich le joint entre le corps principal et la butée mobile du clapet,
- la butée mobile est constituée ou comprend un matériau métallique et en ce que, lorsque la butée obture le canal, cette butée mobile coopère avec une portion métallique du canal pour réaliser un contact du type métal/métal,
- le corps principal du clapet mobile est guidé en translation dans un fourreau fixe, l'organe de rappel étant logé dans le fourreau,
- un passage est prévu pour le transit du gaz lors des opérations de remplissage entre la surface extérieure du corps principal du clapet mobile et la structure,
- un passage est prévu pour le transit du gaz lors des opérations de remplissage entre la surface extérieure du fourreau et la structure,
- le dispositif d'obturation est monté de façon amovible sur un robinet ou est monobloc avec un robinet,
- un interstice est prévu pour le gaz entre le corps principal du clapet mobile et le fourreau fixe, pour empêcher une montée en pression excessive dans le fourreau lorsque le corps principal plonge dans le fourreau,
- l'extrémité amont du corps principal qui fait saille relativement à la butée mobile comporte une surface d'appui destinée à être poussée par un outil d'un raccord de remplissage de gaz, pour déplacer le clapet mobile vers sa seconde position,
- le dispositif comprend un filtre disposé au niveau de son extrémité aval, le filtre étant disposé sur un canal de soutirage, le canal de soutirage reliant une première extrémité destinée à être mise en relation avec l'intérieur d'un stockage de gaz à une seconde extrémité destinée à être reliée à un raccord de soutirage de gaz,
- lorsque le clapet se déplace de sa seconde position vers sa première position, la butée mobile et le corps principal effectuent d'abord un déplacement simultané, puis la butée mobile vient s'arrêter contre une portion de la structure tandis que le corps principal continue un déplacement supplémentaire jusqu'à une position amont limite, pour provoquer un déplacement relatif entre le corps principal et la butée mobile qui déplace le mécanisme de mise en pression sélective du joint dans sa position de travail,
- la position amont limite du corps principal est définie par une butée mécanique du corps principal contre la butée mobile et/ou contre une portion fixe de la structure,
- lorsque le clapet est dans première position, le corps principal comporte une surface d'appui amont qui fait saille du côté amont par rapport à la butée mobile pour être soumise en premier à une pression d'ouverture et provoquer ainsi un déplacement relatif entre le corps principal et la butée mobile qui déplace le mécanisme de mise en pression sélective du joint dans sa position de repos,
- lorsque le clapet est dans sa première position et qu'il est soumis à une pression d'ouverture déterminée, le corps principal est d'abord déplacé seul en direction de la seconde position d'ouverture pour réaliser un déplacement relatif entre le corps principal et la butée mobile qui déplace le mécanisme de mise en pression sélective du joint dans sa position de repos, puis lorsque le corps principal atteint une position d'affleurement avec la butée mobile la pression d'ouverture déplace ensuite simultanément le corps principal et la butée mobile,
- les extrémités amont du corps principal et de la butée mobile comportent des surfaces d'appui respectives prévues pour recevoir une pression d'ouverture mécanique,
- le joint est torique est logé dans un logement annulaire délimité par le corps principal et la butée mobile, la butée mobile comportant une surface extérieure formant une rampe de guidage du flux de fluide au dessus du joint,

L'invention concerne également un robinet pour le contrôle de gaz sous pression d'un récipient, comprenant un raccord de remplissage selon l'une quelconque des caractéristiques ci-dessus ou ci-après.

L'invention concerne également un procédé de remplissage d'un contenant de gaz pourvu d'un dispositif d'obturation conforme à l'une quelconque des caractéristiques ci-dessus ou ci-après au moyen d'un outil de remplissage comprenant un poussoir mécanique destiné à fournir une pression mécanique d'ouverture sur le clapet, dans lequel, lors d'une opération d'ouverture du clapet, dans une première phase d'ouverture la surface extrême du poussoir pousse mécaniquement d'abord le corps principal et déplace ainsi le corps principal relativement à la butée mobile pour disposer le mécanisme de mise en pression sélective du joint dans sa position de repos, puis, dans une deuxième phase d'ouverture, la surface extrême du poussoir pousse mécaniquement conjointement la butée mobile et le corps pour disposer le clapet dans sa seconde position d'ouverture.

Selon d'autres particularités possibles :
- lors d'une opération de fermeture du clapet par retrait du poussoir, dans une première phase de fermeture la butée mobile et le corps se déplacent conjointement en direction de la première position puis, dans une deuxième phase de fermeture la butée mobile vient s'arrêter contre une partie fixe de la structure tandis que le corps principal continue un déplacement supplémentaire jusqu'à une position amont limite, pour provoquer un déplacement relatif entre le corps principal et la butée mobile qui déplace le mécanisme de mise en pression sélective du joint dans sa position de travail,
- lors de l'opération d'ouverture le mécanisme de mise en pression sélective du joint est déplacé dans sa position de repos avant ou en même temps que le joint est déplacé de son siège,
- en fin de remplissage, lors de l'opération de fermeture le mécanisme de mise en pression sélective du joint est déplacé dans sa position de travail au moment ou après que le clapet atteint sa première position de fermeture.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en coupe, schématique et partielle, illustrant un exemple de réalisation d'un dispositif d'obturation selon l'invention, en position ouverte,
- la figure 2 représente une vue analogue du dispositif de la figure 1 en position fermée,
- les figures 3 et 4 représentent des vues schématiques simplifiées illustrant le principe de fonctionnement de l'invention (dispositif respectivement en position fermée et ouverte),
- la figure 5 représente une vue en coupe, schématique et partielle, illustrant un autre exemple de réalisation possible de l'invention.

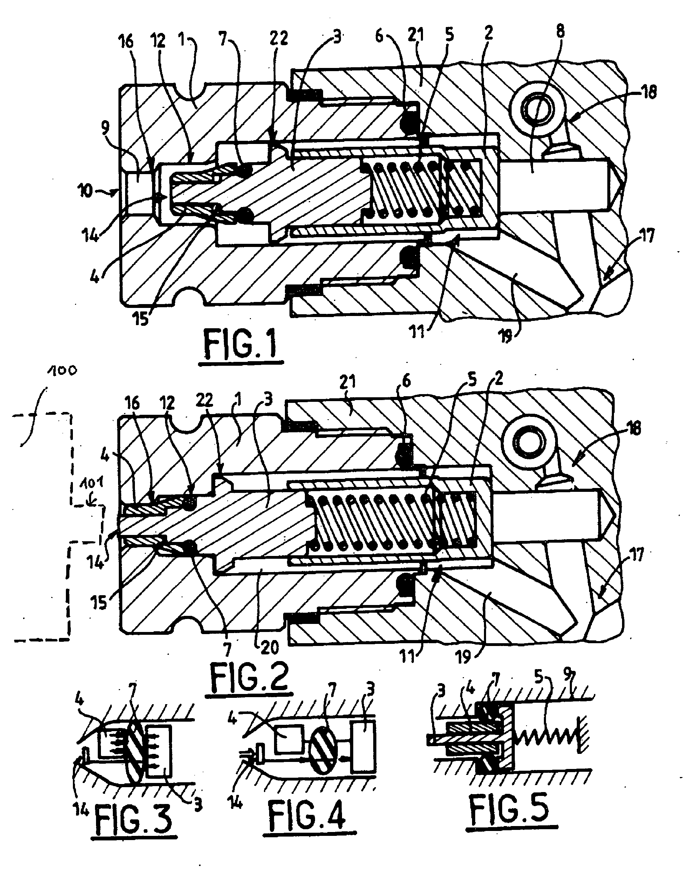

La figure 1 illustre une prise de remplissage, par exemple d'un robinet de bouteille de gaz (robinet à détendeur intégré ou non).

La prise de prise de remplissage est de préférence du type à connexion rapide. Cette prise de remplissage est un mécanisme permettant de remplir une bouteille de gaz de façon sécurisée.

La prise de remplissage comprend un dispositif d'obturation sélective dont un exemple va être décrit plus en détail. Le dispositif d'obturation est prévu pour ne permettre le remplissage (ouverture) que lors d'un processus déterminé et pour se refermer automatiquement de manière étanche une fois le remplissage terminé.

Dans l'exemple non limitatif représenté aux figures 1 et 2, le dispositif comprend une structure 1 ou embase abritant tout ou partie des pièces constitutives. La structure 1 peut par exemple être vissée sur le corps d'un robinet 21. Un joint 6 peut être prévu pour faire l'étanchéité entre la structure 1 et le corps 21 du robinet.

La structure 1 définit un canal 9 pour le passage de fluide s'étendant entre une entrée 10 située à une extrémité amont (côté extérieur) et une sortie 11 située à une extrémité aval (côté intérieur du robinet).

Un clapet 3, 4 est monté mobile dans le canal. Le clapet 3, 4 est sollicité vers un siège 2 (position de fermeture) par un ressort 5 de rappel. De préférence, un fourreau intermédiaire 2 est logé dans la structure et abrite le ressort 5. De même, le clapet 3, 4 est guidé en translation dans le fourreau 2. De plus, l'extrémité aval du fourreau 2 peut également être prévue pour maintenir en position un filtre 8 dans un canal.

L'extrémité amont du clapet 3, 4 est prévue pour être poussée par un outil 100 de remplissage afin d'ouvrir le passage pour du gaz de remplissage circulant d'amont en aval (cf. figure 2). Le clapet mobile 3, 4 comprend un corps principal 3 et une butée 4 mobile relativement au corps principal. Par exemple, la butée 4 mobile est guidée en translation sur l'extrémité amont du corps 3 principal du clapet. Le corps principal 3 du clapet porte un joint d'étanchéité 6 situé entre un épaulement du corps 3 principal et une extrémité de la butée 4 mobile. De préférence, le joint 7 est un joint torique déformable destiné à coopérer, par exemple radialement, avec un siège 12 formé par exemple par une portion cylindrique du canal 9.

La figure 2 illustre le dispositif en position fermée.

La butée 4 mobile est bloquée contre la structure 1 sous l'action du ressort 5.

De préférence, la butée 4 a une forme complémentaire de sa zone 16 de réception sur le corps 1 pour assurer également une obturation (en plus de l'obturation étanche au niveau du joint 7). Par exemple, la butée 4 mobile a une forme extérieure conique qui coopère avec une arête circulaire 16 dans le canal 9.

Le contact entre ce cône de la butée mobile 4 et l'arête 16 est par exemple un contact métal/métal assurant une étanchéité protégeant l'intérieur du canal contre les risques d'entrée d'impuretés.

Dans cette position de fermeture, le corps 3 principal du clapet est de préférence en butée sur le clapet mobile de remplissage 4 (formes complémentaires 15). Sous l'action du ressort 5 et de la butée 4 contre le canal, l'extrémité 14 amont du corps principal 3 du clapet fait saillie par rapport à la butée mobile en direction amont.

Dans cette position de fermeture, le joint 7 torique situé entre deux épaulements appartenant respectivement au corps de clapet et à la butée 4 mobile est comprimé (par exemple latéralement). La butée 15 entre les deux pièces relativement mobiles 3 et 4 du clapet permet de maîtriser l'écrasement du joint 7. Cette compression contrôlée du joint 7 augmente le diamètre extérieur du joint 7. Ceci a pour effet de plaquer le joint 7 contre l'alésage (siège 12). Cet effort de serrage du joint 7 permet d'améliorer l'étanchéité et permet notamment le rattrapage de l'usure et des défauts éventuels de pièces. La figure 3 schématise le principe de la position fermée (compression du joint 7 en position fermée entre les deux pièces 3 et 4 mobiles).

Pour ouvrir le dispositif, un utilisateur introduit dans le canal du côté amont une prise 100 de remplissage qui présente une extrémité 101 ou un axe poussoir 101 destiné à repousser mécaniquement l'extrémité du clapet 3, 4 mobile.

Du fait de la saillie 14 du corps 3 principal par rapport à la butée 4 mobile, l'outil d'ouverture commence par appuyer sur le corps principal 3 (avant de pousser la butée 4 mobile). L'outil repousse alors vers l'aval le corps principal 3 par rapport à la butée 4 mobile. Ceci a pour effet d'augmenter la largeur de la gorge logeant le joint 7 et ainsi de relâcher la pression d'écrasement sur ce dernier. La figure 4 illustre schématiquement le principe de la position ouverte (l'appui sur l'extrémité amont 14 provoque l'écartement des deux pièces mobiles 3, 4 pour relâcher la pression sur le joint 7).

Ensuite, en continuant sa course, l'outil 100, 101 de remplissage appuie à la fois sur le corps 3 principal du clapet et sur la butée 4 mobile. La pression sur le joint 7 ayant été diminuée, le joint 7 présente alors un encombrement plus réduit vers l'extérieur (vers le siège 12). Ceci diminue ou annule son frottement contre l'alésage (siège 12) lors du déplacement du clapet 3, 4 vers la position d'ouverture (figure 1). Cette diminution du frottement réduit les risques d'usure. De préférence l'écrasement du joint 7 est diminué avant ou au début du déplacement du clapet 3, 4 vers sa position d'ouverture.

Bien entendu, en variante, les séquences de mise en pression ou de relâchement de la pression du joint 7 indépendamment du déplacement du joint 7 peuvent être obtenues également par la géométrie du poussoir 101 de l'outil de remplissage. C'est-à-dire que, lorsque le clapet 3, 4 est dans sa première position de fermeture, il n'est pas forcément nécessaire que le corps principal 3 fasse saillie en amont par rapport à la butée 4 mobile.

De façon avantageuse, comme représenté, le corps principal 3 du clapet peut être guidé en translation dans le fourreau 2.

De préférence, le jeu radial entre le corps principal 3 du clapet et le fourreau 2 est choisi de façon à ne pas nécessiter de perçage dans le fourreau 2 pour libérer la pression du gaz lorsque le corps 3 principal pénètre dans le fourreau 2.

Le profil de la butée mobile 4 est de préférence déterminé pour orienter et diriger le flux gazeux lors du remplissage de façon à interférer au minimum avec le joint 7 (cf. figures, la surface extérieure conique forme par exemple une rampe qui dirige le flux au-dessus ou au dessous du joint 7).

De même, le corps 3 principal du clapet peut comporter une collerette maximisant le passage du gaz dans le sens du soutirage (d'aval en amont). La collerette 22 forme par exemple une rampe favorisant l'écoulement du gaz d'aval en amont (au détriment de la circulation d'amont vers l'aval). Le gaz de remplissage admis peut ensuite circuler par exemple autour du fourreau 2 avant de rejoindre un orifice 11 relié à un conduit 19 d'un robinet par exemple. Par exemple, la surface extérieure du fourreau 2 peut être carrée en section transversale et coopérer avec un alésage cylindrique ou parallélépipédique. Le profil extérieur du fourreau 2 peut être par exemple usiné pour s'ajuster avec l'intérieur de la structure 1.

Le fourreau 2 peut être utilisé pour bloquer un filtre 8 dans son logement situé sur un conduit de soutirage ayant une extrémité 17 reliée au gaz et une extrémité 18 reliée à une sortie de soutirage d'un robinet par exemple.

De cette façon, le ressort 5 de clapet est totalement protégé dans son logement défini par le fourreau 2. Cette configuration minimise le contact potentiel entre le ressort 2 avec le gaz qui transite dans la prise de remplissage.

On conçoit donc aisément que, tout en étant de structure simple et peu coûteuse, le dispositif selon l'invention présente une étanchéité de grande qualité. Le structure et le fonctionnement du dispositif d'étanchéité lors des opérations de remplissage améliorent la sécurité du remplissage pour l'utilisateur ultérieur de la bouteille ou du récipient rempli.

Par ailleurs, l'usure du joint d'étanchéité 7 est minimisée par l'élargissement et le rétrécissement sélectifs de la gorge du joint 7 (élargissement lorsque le clapet est en position fermée, rétrécissement lorsque le clapet s'ouvre). Ceci améliore la durée de vie du dispositif.

L'invention réalise une fonction d'auto-serrage qui garantit une étanchéité sans fuites, même après de nombreuses années de fonctionnement et même en cas d'usure éventuelle du joint d'étanchéité 7. De plus, l'étanchéité supplémentaire facultative en bout du clapet (butée 4 mobile contre son siège 16) assure une sécurité supplémentaire. Cette seconde obturation créé une sécurité en empêchant l'entrée de corps indésirables et minimise les risques de fuites en cas de défaillance du joint 7.

De préférence, le ressort 5 de clapet est protégé du flux gazeux dans son fourreau 2. Ceci limite les risques d'inflammation sous compression adiabatique dans le cas d'une utilisation avec de l'oxygène.

L'invention permet ainsi d'assurer une étanchéité parfaite du dispositif, même dans le cas ou le joint d'étanchéité serait usé au cours du temps, du fait par exemple d'un serrage maximal du joint lorsque l'étanchéité est requise.

Bien entendu, l'invention n'est pas limitée à l'exemple de réalisation décrit ci-dessus. Par exemple, il est possible d'envisager que le joint 7 déformable soit fixe, par exemple solidaire du canal 9 comme schématisé à la figure 5. Comme précédemment, le clapet 3, 4 forme un mécanisme de mise en pression sélective du joint lors de la fermeture. Un organe de rappel tel qu'un ressort 5 vient écraser le joint 7 via le corps 3 principal de clapet. Lors de l'ouverture (poussée du clapet 3, 4 hors du siège), le corps 3 principal de clapet est actionnée avant la butée mobile 4 pour relâcher la pression sur le joint 7 fixe. Le clapet 3, 4 peut alors se déplacer sans trop frotter avec le joint 7. En position fermée, le clapet 3, 4 est sollicité par un ressort 5 en position de fermeture.

## Revendications

1. Dispositif d'obturation sélective d'un passage de fluide pour une prise de remplissage, notamment d'un robinet de gaz, comprenant une structure (1) définissant un canal (9) pour le passage de fluide s'étendant entre une entrée (10) située à une extrémité amont et une sortie (11) située à une extrémité aval, un siège (12) de clapet, un clapet (3, 4) sélectivement mobile dans le canal (9) entre une première position d'obturation du passage par appui étanche sur le siège (12) et une seconde position d'ouverture du passage sans appui étanche sur le siège (12), un organe de rappel (5) sollicitant le clapet (3, 4) vers sa première position, le dispositif d'obturation comprenant un joint (7) d'étanchéité déformable porté par le clapet (3, 4) mobile et/ou par le siège (12) prévu pour appuyer sur le siège (12) et participer à l'étanchéité de l'obturation lorsque le clapet (3, 4) est dans sa première position, le clapet (3, 4) mobile comprenant une extrémité amont (14) destinée à être soumise à une pression d'ouverture pour déplacer le clapet (3, 4) vers sa second position, **caractérisé en ce que** le clapet (3, 4) mobile comporte une corps (3) principal et une butée mobile (4) relativement au corps principal (3), le corps (3) principal et la butée (4) mobile formant un mécanisme de mise en pression sélective du joint (7) déplaçable entre une position de travail mettant en pression le joint (7) en vue d'augmenter son effort sur le siège (12) et une position de repos relâchant la pression sur le joint (7) en vue de diminuer son effort sur le siège (12) et **en ce que**, lorsque le clapet (3, 4) passe de sa seconde position à sa première position, la butée (4) mobile vient s'arrêter en premier contre une portion fixe de la structure (1) tandis que le corps principal (3) réalise un déplacement supplémentaire provoquant un déplacement relatif entre le corps (3) principal et la butée mobile (4) qui déplace le mécanisme de mise en pression sélective du joint (7) dans sa position de travail

2. Dispositif selon la revendication 1, **caractérisé en ce que** lorsque le clapet (3, 4) se déplace de sa seconde position vers sa première position, la butée (4) mobile et le corps (3) principal effectuent d'abord un déplacement simultané, puis la butée (4) mobile vient s'arrêter contre une portion de la structure (1) tandis que le corps (3) principal continue un déplacement supplémentaire jusqu'à une position amont limite, pour provoquer un déplacement relatif entre le corps (3) principal et la butée mobile (4) qui déplace le mécanisme de mise en pression sélective du joint (7) dans sa position de travail.

3. Dispositif selon la revendication 2, **caractérisé en ce que** la position amont limite du corps (3) principal est définie par une butée mécanique du corps (3) principal contre la butée (4) mobile et/ou contre une portion fixe de la structure (1).

4. Dispositif selon l'une quelconque des revendications 1 à 3, **caractérisé en ce que**, lorsque le clapet (3, 4) est dans première position, le corps (3) principal comporte une surface d'appui amont qui fait saille du côté amont par rapport à la butée (4) mobile pour être soumise en premier à une pression d'ouverture et provoquer ainsi un déplacement relatif entre le corps (3) principal et la butée mobile (4) qui déplace le mécanisme de mise en pression sélective du joint (7) dans sa position de repos.

5. Dispositif selon la revendication 4, **caractérisé en ce que**, lorsque le clapet est dans sa première position et qu'il est soumis à une pression d'ouverture déterminée, le corps (3) principal est d'abord déplacé seul en direction de la seconde position d'ouverture pour réaliser un déplacement relatif entre le corps (3) principal et la butée mobile (4) qui déplace le mécanisme de mise en pression sélective du joint (7) dans sa position de repos, puis lorsque le corps (3) principal atteint une position d'affleurement avec la butée (4) mobile la pression d'ouverture déplace ensuite simultanément le corps (3) principal et la butée (4) mobile.

6. Dispositif selon l'une quelconque des revendications 1 à 5, **caractérisé en ce que** les extrémités amont du corps (3) principal et de la butée (4) mobile comportent des surfaces d'appui respectives prévues pour recevoir une pression d'ouverture mécanique.

7. Dispositif selon l'une quelconque des revendications 1 à 6, **caractérisé en ce que** le corps (3) principal et la butée mobile (4) coopèrent mécaniquement pour déplacer automatiquement le mécanisme de mise en pression sélective du joint (7) dans la position de travail lorsque le clapet vient dans sa première position d'obturation.

8. Dispositif selon l'une quelconque des revendications 1 à 7, **caractérisé en ce que** le corps (3) principal et la butée mobile (4) coopèrent mécaniquement pour déplacer automatiquement le mécanisme de mise en pression sélective du joint (7) dans la position de repos dès que ou avant que le clapet commence son déplacement vers sa seconde position.

9. Dispositif selon l'une quelconque des revendications 1 à 8, **caractérisé en ce que** la surface extérieure de la butée (4) mobile est conjuguée d'une zone de réception (16) du canal (9) et **en ce que**, lorsque le clapet (3, 4) est dans sa première position, la butée (4) mobile obture le canal (9) en coopérant avec cette zone de réception (16) pour former une seconde zone d'obturation, distincte de la zone d'obturation réalisée au niveau du joint (7) déformable.

10. Dispositif selon l'une quelconque des revendications 1 à 9, **caractérisé en ce que** le joint (7) est torique est logé dans un logement annulaire délimité par le corps (3) principal et la butée (4) mobile et **en ce que** la butée mobile comporte une surface extérieure formant une rampe de guidage du flux de fluide au dessus du joint (7).

11. Robinet pour le contrôle de gaz sous pression d'un récipient telle qu'une bouteille de gaz, comprenant un raccord de remplissage, **caractérisé en ce que** le raccord comprend un dispositif selon l'une quelconque des revendications 1 à 10.

12. Procédé de remplissage d'un contenant de gaz pourvu d'un dispositif d'obturation conforme à l'une quelconque des revendications 1 à 11 au moyen d'un outil (100) de remplissage comprenant un poussoir (101) mécanique destiné à fournir une pression mécanique d'ouverture sur le clapet (3, 4), **caractérisé en ce que** lors d'une opération d'ouverture du clapet (3, 4), dans une première phase d'ouverture la surface extrême du poussoir (101) pousse mécaniquement d'abord le corps (3) principal et déplace ainsi le corps (3) principal relativement à la butée mobile (4) pour disposer le mécanisme de mise en pression sélective du joint (7) dans sa position de repos, puis, dans une deuxième phase d'ouverture, la surface extrême du poussoir (101) pousse mécaniquement conjointement la butée (4) mobile et le corps (3) pour disposer le clapet dans sa seconde position d'ouverture.

13. Procédé de remplissage d'un contenant de gaz pourvu d'un dispositif d'obturation conforme à l'une quelconque des revendications 1 à 11 au moyen d'un outil (100) de remplissage comprenant un poussoir (101) mécanique destiné à fournir une pression mécanique d'ouverture sur le clapet (3, 4), **caractérisé en ce que** lors d'une opération de fermeture du clapet (3, 4) par retrait du poussoir (101), dans une première phase de fermeture la butée (4) mobile et le corps (3) se déplacent conjointement en direction de la première position puis, dans une deuxième phase de fermeture la butée (4) mobile vient s'arrêter contre une partie fixe (1) de la structure tandis que le corps (3) principal continue un déplacement supplémentaire jusqu'à une position amont limite, pour provoquer un déplacement relatif entre le corps (3) principal et la butée mobile (4) qui déplace le mécanisme de mise en pression sélective du joint (7) dans sa position de travail.

14. Procédé selon l'une quelconque des revendications 12 ou 13, **caractérisé en ce que** lors de l'opération d'ouverture le mécanisme de mise en pression sélective du joint (7) est déplacé dans sa position de repos avant ou en même temps que le joint (7) est déplacé de son siège (12).

15. Procédé selon l'une quelconque des revendications 12 à 14, **caractérisé en ce que**, en fin de remplissage, lors de l'opération de fermeture le mécanisme de mise en pression sélective du joint (7) est déplacé dans sa position de travail au moment ou après que le clapet (3, 4) atteint sa première position de fermeture.

## Claims

1. Device for selectively blocking a fluid passage for a filling intake, in particular a gas tap, comprising a structure (1) defining a channel (9) for the fluid passage extending between an inlet (10) located at an upstream extremity and an outlet (11) located at a downstream extremity, a valve seat (12), a movable valve (3, 4) that is selectively movable in the channel (9) between a first position for blocking the passage by sealingly contacting the seat (12) and a second position for opening the passage without sealing contact with the seat (12), a return member (5) forcing the movable valve (3, 4) towards the first position thereof, the blocking device comprising a deformable seal (7) supported by the movable valve (3, 4) and/or by the seat (12) configured to press against the seat (12) and to form the blocking seal when the valve (3, 4) is in the first position thereof, the movable valve (3, 4) comprising an upstream extremity (14) adapted to move the valve (3, 4) towards the second position thereof when said upstream extremity is subjected to an opening pressure, **characterised in that** the movable valve (3, 4) comprises a main body (3) and a stop (4) that is movable relative to the main body (3), the main body (3) and the movable stop (4) forming a mechanism for selectively pressurising the seal (7) that is able to move between a working position that pressurises the seal (7) in order to increase the force thereof exerted on the seat (12), and a resting position that releases the pressure on the seal (7) in order to decrease the force thereof exerted on the seat and **in that**, when the valve (3, 4) moves from the second position thereof to the first position thereof, the movable stop (4) stops first against a fixed portion of the structure (1) while the main body (3) effects an additional movement, causing a relative movement between the main body (3) and the movable stop (4) that moves the mechanism for selectively pressurising the seal (7) into the working position thereof.

2. Device according to claim 1, **characterised in that**, when the valve (3, 4) moves from the second position thereof to the first position thereof, the movable stop (4) and the main body (3) first effect a simultaneous movement, then the movable stop (4) stops against a portion of the structure (1) while the main body (3) continues an additional movement to an upstream limit position, to cause a relative movement between the main body (3) and the movable stop (4) which moves the mechanism for selectively pressurising the seal (7) into the working position thereof.

3. Device according to claim 2, **characterised in that** the upstream limit position of the main body (3) is defined by a mechanical stop of the main body (3) against the movable stop (4) and/or against a fixed portion of the structure (1).

4. Device according to any of claims 1 to 3, **characterised in that**, when the valve (3, 4) is in the first position thereof, the main body (3) comprises an upstream pressure surface that projects on the upstream side in relation to the movable stop (4) such that the upstream pressure surface is subjected first to an opening pressure and thus causes a relative movement between the main body (3) and the movable stop (4) that moves the mechanism for selectively pressurising the seal (7) into the resting position thereof.

5. Device according to claim 4, **characterised in that** when the valve is in the first position thereof and is subjected to a determined opening pressure, the main body (3) is first moved only towards the second opening position to effect a relative movement between the main body (3) and the movable stop (4) which moves the mechanism for selectively pressurising the seal (7) into the resting position thereof, then when the main body (3) reaches a flush position with the movable stop (4), the opening pressure then simultaneously moves the main body (3) and the movable stop (4).

6. Device according to any of claims 1 to 5, **characterised in that** the upstream extremities of the main body (3) and of the movable stop (4) comprise respective pressure surfaces designed to receive a mechanical opening pressure.

7. Device according to any of claims 1 to 6, **characterised in that** the main body (3) and the movable stop (4) cooperate mechanically to automatically move the mechanism for selectively pressurising the seal (7) into the working position when the valve is in the first blocking position thereof.

8. Device according to any of claims 1 to 7, **characterised in that** the main body (3) and the movable stop (4) cooperate mechanically to automatically move the mechanism for selectively pressurising the seal (7) into the resting position when or before the valve begins to move towards the second position thereof.

9. Device according to any of claims 1 to 8, **characterised in that** the outer surface of the movable stop (4) is combined with a reception zone (16) of the channel (9) and **in that**, when the valve (3, 4) is in the first position thereof, the movable stop (4) blocks the channel (9) in cooperation with said reception zone (16) to form a second blocking zone, distinct from the first blocking zone formed in the region of the deformable seal (7).

10. Device according to any of claims 1 to 9, **characterised in that** the seal (7) is an O-ring and is housed in an annular housing delimited by the main body (3) and the movable stop (4), and **in that** the movable stop has an outer surface that forms a guide ramp for the fluid stream above the seal (7).

11. Tap for controlling pressurised gas of a recipient such as a gas cylinder, comprising a filling connection, **characterised in that** the connection comprises a device according to any of claims 1 to 10.

12. Method for filling a gas container fitted with a blocking device according to any of claims 1 to 11 using a filling tool (100) comprising a mechanical pusher (101) adapted to supply a mechanical opening pressure to the valve (3, 4), **characterised in that**, when opening the valve (3, 4), in a first opening phase the outermost surface of the pusher (101) first mechanically pushes the main body (3) and thus moves the main body (3) relative to the movable stop (4) to put the mechanism for selectively pressurising the seal (7) into the resting position thereof, then, in a second opening phase, the outermost surface of the pusher (101) mechanically pushes the movable stop (4) and the body (3) jointly to put the valve in the second opening position thereof.

13. Method for filling a gas container fitted with a blocking device according to any of claims 1 to 11 using a filling tool (100) comprising a mechanical pusher (101) adapted to supply a mechanical opening pressure to the valve (3, 4), **characterised in that**, when closing the valve (3, 4) by withdrawing the pusher (101), in a first closing phase the movable stop (4) and the body (3) move jointly towards the first position then, in a second closing phase, the movable stop (4) stops against a fixed part (1) of the structure while the main body (3) continues an additional movement to an upstream limit position to cause a relative movement between the main body (3) and the movable stop (4) which moves the mechanism for selectively pressurising the seal (7) into the working position thereof.

14. Method according to either claim 12 or claim 13, **characterised in that**, during the opening operation, the mechanism for selectively pressurising the seal (7) is moved into the resting position thereof before or at the same time that the seal (7) is moved from its seat (12).
sealseal 15. Method according to any of claims 12 to 14, **characterised in that**, when filling is complete, during the closing operation the mechanism for selectively pressurising the seal (7) is moved into the working position thereof at the time that or after the valve (3, 4) reaches the first closing position thereof.

## Patentansprüche

1. Vorrichtung zum selektiven Verschließen eines Fluiddurchlasses für einen Füllstutzen, insbesondere eines Gashahns, umfassend eine Struktur (1), die einen Kanal (9) für den Fluiddurchlass bildet, der sich zwischen einem Einlass (10), der sich an einem stromaufwärts befindlichen Ende befindet, und einem Auslass (11), der sich an einem stromabwärts befindlichen Ende befindet, erstreckt, einen Ventilsitz (12), ein Ventil (3, 4), das in dem Kanal (9) selektiv beweglich ist zwischen einer ersten Stellung für den Verschluss des Durchlasses durch abdichtendes Aufliegen auf dem Sitz (12) und einer zweiten Stellung für das Öffnen des Durchlasses ohne abdichtendes Aufliegen auf dem Sitz (12), ein Rückstellorgan (5), welches das Ventil (3, 4) in Richtung seiner ersten Stellung beaufschlagt, wobei die Verschlussvorrichtung eine verformbare Dichtung (7) umfasst, die durch das bewegliche Ventil (3, 4) und/oder durch den Sitz (12) getragen wird und dafür vorgesehen ist, auf dem Sitz (12) aufzuliegen und an der Abdichtung des Verschlusses teilzuhaben, wenn das Ventil (3, 4) in seiner ersten Stellung ist, wobei das bewegliche Ventil (3, 4) ein stromaufwärts befindliches Ende (14) umfasst, das dafür vorgesehen ist, einem Öffnungsdruck ausgesetzt zu werden, um das Ventil (3, 4) in Richtung seiner zweiten Stellung zu bewegen, **dadurch gekennzeichnet, dass** das bewegliche Ventil (3, 4) einen Hauptkörper (3) und einen relativ zu dem Hauptkörper (3) beweglichen Anschlag (4) aufweist, wobei der Hauptkörper (3) und der bewegliche Anschlag (4) einen Mechanismus für die selektive Unterdrucksetzung der Dichtung (7) bilden, der beweglich ist zwischen einer Arbeitsstellung, welche die Dichtung (7) unter Druck setzt, um ihre Beaufschlagung des Sitzes (12) zu erhöhen, und einer Ruhestellung, die den Druck auf die Dichtung (7) löst, um ihre Beaufschlagung des Sitzes (12) zu verringern, und dass, wenn das Ventil (3, 4) aus seiner zweiten Stellung in seine erste Stellung übergeht, der bewegliche Anschlag (4) als erster gegen einen ortsfesten Teil der Struktur (1) zum Stillstand kommt, während der Hauptkörper (3) eine zusätzliche Bewegung vollzieht, die eine relative Bewegung zwischen dem Hauptkörper (3) und dem beweglichen Anschlag (4) bewirkt, die den Mechanismus für die selektive Unterdrucksetzung der Dichtung (7) in seine Arbeitsstellung bewegt.

2. Vorrichtung nach Anspruch 1, **dadurch gekennzeichnet, dass**, wenn das Ventil (3, 4) sich aus seiner zweiten Stellung in seine erste Stellung bewegt, der bewegliche Anschlag (4) und der Hauptkörper (3) zunächst eine gleichzeitige Bewegung vollziehen und anschließend der bewegliche Anschlag (4) gegen einen Teil der Struktur (1) zum Stillstand kommt, während der Hauptkörper (3) eine zusätzliche Bewegung bis zu einer stromaufwärts befindlichen Grenzstellung fortsetzt, um eine relative Bewegung zwischen dem Hauptkörper (3) und dem beweglichen Anschlag (4) zu bewirken, die den Mechanismus für die selektive Unterdrucksetzung der Dichtung (7) in seine Arbeitsstellung bewegt.

3. Vorrichtung nach Anspruch 2, **dadurch gekennzeichnet, dass** die stromaufwärts befindliche Grenzstellung des Hauptkörpers (3) von einem mechanischen Anschlag des Hauptkörpers (3) gegen den beweglichen Anschlag (4) und/oder gegen einen ortsfesten Teil der Struktur (1) definiert wird.

4. Vorrichtung nach einem der Ansprüche 1 bis 3, **dadurch gekennzeichnet, dass**, wenn das Ventil (3, 4) in seiner ersten Stellung ist, der Hauptkörper (3) eine stromaufwärts befindliche Auflagefläche aufweist, die auf der stromaufwärts befindlichen Seite über den beweglichen Anschlag (4) übersteht, um als erste einem Öffnungsdruck ausgesetzt zu werden und dadurch eine relative Bewegung zwischen dem Hauptkörper (3) und dem beweglichen Anschlag (4) zu bewirken, die den Mechanismus für die selektive Unterdrucksetzung der Dichtung (7) in seine Ruhestellung bewegt.

5. Vorrichtung nach Anspruch 4, **dadurch gekennzeichnet, dass**, wenn das Ventil in seiner ersten Stellung ist und einem festgelegten Öffnungsdruck ausgesetzt ist, der Hauptkörper (3) zunächst allein in Richtung der zweiten Öffnungsstellung bewegt wird, um eine relative Bewegung zwischen dem Hauptkörper (3) und dem beweglichen Anschlag (4) zu vollziehen, die den Mechanismus für die selektive Unterdrucksetzung der Dichtung (7) in seine Ruhestellung bewegt, und anschließend, wenn der Hauptkörper (3) eine Bündigkeitsstellung mit dem beweglichen Anschlag (4) erreicht, der Öffnungsdruck dann gleichzeitig den Hauptkörper (3) und den beweglichen Anschlag (4) bewegt.

6. Vorrichtung nach einem der Ansprüche 1 bis 5, **dadurch gekennzeichnet, dass** die stromaufwärts befindlichen Enden des Hauptkörpers (3) und des beweglichen Anschlags (4) jeweilige Auflageflächen für die Aufnahme eines mechanischen Öffnungsdrucks aufweisen.

7. Vorrichtung nach einem der Ansprüche 1 bis 6, **dadurch gekennzeichnet, dass** der Hauptkörper (3) und der bewegliche Anschlag (4) mechanisch zusammenwirken, um den Mechanismus für die selektive Unterdrucksetzung der Dichtung (7) automatisch in die Arbeitsstellung zu bewegen, wenn das Ventil in seine erste Verschlussstellung kommt.

8. Vorrichtung nach einem der Ansprüche 1 bis 7, **dadurch gekennzeichnet, dass** der Hauptkörper (3) und der bewegliche Anschlag (4) mechanisch zusammenwirken, um den Mechanismus für die selektive Unterdrucksetzung der Dichtung (7) automatisch in die Ruhestellung zu bewegen, sobald oder bevor das Ventil seine Bewegung in Richtung seiner zweiten Stellung beginnt.

9. Vorrichtung nach einem der Ansprüche 1 bis 8, **dadurch gekennzeichnet, dass** die außen liegende Fläche des beweglichen Anschlags (4) einer Zone für die Aufnahme (16) des Kanals (9) zugeordnet ist, und dass, wenn das Ventil (3, 4) in seiner ersten Stellung ist, der bewegliche Anschlag (4) den Kanal (9) verschließt, indem er mit dieser Aufnahmezone (16) zusammenwirkt, um eine zweite Verschlusszone zu bilden, die sich von der Verschlusszone unterscheidet, die im Bereich der verformbaren Dichtung (7) gebildet ist.

10. Vorrichtung nach einem der Ansprüche 1 bis 9, **dadurch gekennzeichnet, dass** die Dichtung (7) ein O-Ring ist und in einer ringförmigen Aufnahme angeordnet ist, die durch den Hauptkörper (3) und den beweglichen Anschlag (4) begrenzt wird, und dass der bewegliche Anschlag eine außen liegende Fläche aufweist, die eine Rampe für die Führung des Fluidstroms oberhalb der Dichtung (7) bildet.

11. Hahn für die Druckgassteuerung eines Behälters, wie eine Gasflasche, der einen Füllstutzen umfasst, **dadurch gekennzeichnet, dass** der Stutzen eine Vorrichtung nach einem der Ansprüche 1 bis 10 umfasst.

12. Verfahren zum Befüllen eines Gasbehälters, der mit einer Verschlussvorrichtung nach einem der Ansprüche 1 bis 11 versehen ist, mit Hilfe eines Füllwerkzeugs (100), das ein mechanisches Schubelement (101) umfasst, das dafür vorgesehen ist, einen mechanischen Öffnungsdruck auf das Ventil (3, 4) bereitzustellen, **dadurch gekennzeichnet, dass** bei einem Vorgang zum Öffnen des Ventils (3, 4), in einer ersten Öffnungsphase die Endfläche des Schubelements (101) zunächst mechanisch den Hauptkörper (3) schiebt und dadurch den Hauptkörper (3) relativ zu dem beweglichen Anschlag (4) bewegt, um den Mechanismus für die selektive Unterdrucksetzung der Dichtung (7) in seiner Ruhestellung anzuordnen, und dann, in einer zweiten Öffnungsphase, die Endfläche des Schubelements (101) mechanisch den Hauptkörper (3) und den beweglichen Anschlag (4) gemeinsam schiebt, um das Ventil in seiner zweiten Öffnungsstellung anzuordnen.

13. Verfahren zum Befüllen eines Gasbehälters, der mit einer Verschlussvorrichtung nach einem der Ansprüche 1 bis 11 versehen ist, mit Hilfe eines Füllwerkzeugs (100), das ein mechanisches Schubelement (101) umfasst, das dafür vorgesehen ist, einen mechanischen Öffnungsdruck auf das Ventil (3, 4) bereitzustellen, **dadurch gekennzeichnet, dass** bei einem Vorgang zum Schließen des Ventils (3, 4) durch Rückzug des Schubelements (101), in einer ersten Schließphase der bewegliche Anschlag (4) und der Körper (3) sich gemeinsam in Richtung der ersten Stellung bewegen und anschließend, in einer zweiten Schließphase der bewegliche Anschlag (4) gegen einen ortsfesten Teil (1) der Struktur zum Stillstand kommt, während der Hauptkörper (3) eine zusätzliche Bewegung bis zu einer stromaufwärts befindlichen Grenzstellung fortsetzt, um eine relative Bewegung zwischen dem Hauptkörper (3) und dem beweglichen Anschlag (4) zu bewirken, die den Mechanismus für die selektive Unterdrucksetzung der Dichtung (7) in seine Arbeitsstellung bewegt.

14. Verfahren nach einem der Ansprüche 12 oder 13, **dadurch gekennzeichnet, dass** beim Vorgang zum Öffnen der Mechanismus für die selektive Unterdrucksetzung der Dichtung (7) in seine Ruhestellung bewegt wird, bevor oder zur gleichen Zeit, wie die Dichtung (7) aus ihrem Sitz (12) bewegt wird.

15. Verfahren nach einem der Ansprüche 12 bis 14, **dadurch gekennzeichnet, dass** am Ende des Befüllens, beim Vorgang zum Schließen der Mechanismus für die selektive Unterdrucksetzung der Dichtung (7) in seine Arbeitsstellung bewegt wird in dem Moment oder nachdem das Ventil (3, 4) seine erste Schließstellung erreicht.
